# FASCICULE DE BREVET EUROPEEN

(11) **EP 3 348 090 B1**
(45) Date de publication et mention de la délivrance du brevet: **06.11.2019**
(21) Numéro de dépôt: 16775785.5
(22) Date de dépôt: 06.09.2016
(51) Int. Cl.: H04W 36/00, H04W 76/10, H04W 80/06

(54) **PROCÉDÉ ET DISPOSITIF D'ÉTABLISSEMENT ET DE MAINTIEN D'UN ACCÈS À INTERNET PAR UTILISATION D'UN PROTOCOLE DE COMMUNICATION SANS FIL EN RÉSEAU INFORMATIQUE LOCAL À PARTIR D'UNE STATION CLIENTE MOBILE**
VERFAHREN UND VORRICHTUNG ZUM AUFBAU UND ZUR AUFRECHTERHALTUNG DES INTERNETZUGANGS DURCH DIE VERWENDUNG EINES DRAHTLOSKOMMUNIKATIONSPROTOKOLLS IN EINEM LOKALEN COMPUTERNETZWERK VON EINER MOBILEN CLIENT-STATION
METHOD AND DEVICE FOR ESTABLISHING AND MAINTAINING INTERNET ACCESS THROUGH THE USE OF A WIRELESS COMMUNICATION PROTOCOL IN A LOCAL COMPUTER NETWORK FROM A MOBILE CLIENT STATION

(30) Priorité: 07.09.2015 FR 1558294
(43) Date de publication de la demande: 18.07.2018
(73) Titulaire: WORLDLINE, 95870 Bezons (FR)
(72) Inventeur: FRESSANCOURT, Antoine, 59000 Lille (FR); DUCROCQ, Tony, 59251 Allennes-les-marais (FR)
(74) Mandataire: Novagraaf Technologies
(86) Numéro de dépôt international: PCT/FR2016/052204
(87) Numéro de publication internationale: WO 2017/042467

(56) Documents cités:
- WO-A1-2015/094043
- US-A1- 2014 362 765
- CHRISTOPH PAASCH ET AL: "Exploring mobile/WiFi handover with multipath TCP", CELLULAR NETWORKS: OPERATIONS, CHALLENGES, AND FUTURE DESIGN, ACM, 2 PENN PLAZA, SUITE 701 NEW YORK NY 10121-0701 USA, 13 août 2012 (2012-08-13), pages 31-36, XP058008082, DOI: 10.1145/2342468.2342476 ISBN: 978-1-4503-1475-6

## Description

La présente invention concerne un procédé d'établissement et de maintien d'un accès à Internet par utilisation d'un protocole de communication sans fil en réseau informatique local à partir d'une station cliente mobile, par l'intermédiaire de plusieurs points d'accès, à choisir successivement dans le temps en fonction de déplacements de la station cliente mobile, dans un ensemble de points d'accès à Internet identifiés utilisant ce protocole de communication sans fil en réseau informatique local. Elle concerne également un programme d'ordinateur et un dispositif correspondants.

Par « protocole de communication sans fil en réseau informatique local », on entend un protocole WLAN (de l'anglais « Wireless Local Area Network »).

Plus précisément, l'invention s'applique à un procédé comportant les étapes suivantes :
- établir, pour la station cliente mobile, un accès à Internet par utilisation du protocole de communication sans fil en réseau informatique local par l'intermédiaire d'un premier point d'accès sélectionné dans l'ensemble des points d'accès identifiés,
- ouvrir à cette occasion, pour la station cliente mobile, une première session de communication propre à ce premier point d'accès conformément au protocole de communication sans fil en réseau informatique local, et
- maintenir, pour la station cliente mobile, l'accès à Internet tout en ouvrant au moins une autre session de communication propre à au moins un autre point d'accès ultérieurement sélectionné dans l'ensemble des points d'accès identifiés conformément au protocole de communication sans fil en réseau informatique local.

On connaît des procédés de ce type, notamment ceux mettant en oeuvre l'un des protocoles de communication sans fil en réseau informatique local normalisés par le groupe IEEE 802.11, appelés usuellement protocoles Wi-Fi (marque déposée). De nombreux points d'accès Wi-Fi présentent l'avantage de permettre un accès gratuit à Internet. Mais ils sont généralement de portée limitée. Ainsi, lorsque la station cliente mobile se déplace, notamment lorsqu'elle est embarquée dans un véhicule automobile, elle est amenée à se connecter successivement à plusieurs points d'accès Wi-Fi et à perdre successivement ces connexions. A vitesse normale du véhicule automobile, chaque connexion à un point d'accès Wi-Fi est de courte durée, notamment de l'ordre d'une ou de quelques dizaines de secondes en milieu urbain, et les zones blanches entre deux points d'accès successifs sont fréquentes. Des méthodes de pré-chargement (en anglais « pre-fetching ») ou de cache sont alors envisagées pour masquer ces zones blanches et assurer la continuité d'accès à Internet en lecture/écriture de données.

Mais ces procédés sont d'efficacité limitée lorsque les connexions et déconnexions Wi-Fi successives sont fréquentes, compte tenu en outre des temps d'établissement généralement longs de ces connexions. Il existe pourtant depuis quelques années une réelle amélioration de ces temps de connexion et il est dommage de ne pas savoir en tirer parti.

Par ailleurs, les stations clientes mobiles dotées de moyens de communication par Wi-Fi, ou plus généralement par utilisation d'un protocole de communication sans fil en réseau informatique local, sont également souvent dotées de moyens de communication par utilisation d'un protocole de communication sans fil en réseau téléphonique étendu tel que l'un de ceux normalisés sous l'appellation 2G, 3G ou 4G. On peut donc envisager de façon alternative accéder à Internet par ces moyens puisque les zones couvertes par les points d'accès en téléphonie mobile sont nettement plus étendues. Mais l'accès à Internet n'est alors pas gratuit.

Enfin, une autre solution consisterait à anticiper toute perte de connexion Wi-Fi en cherchant un autre point d'accès Wi-Fi de façon préventive alors même qu'une connexion Wi-Fi est en cours. Malheureusement, cela n'est pas toujours possible.

Il peut ainsi être souhaité de prévoir un procédé d'établissement et de maintien d'un accès à Internet par utilisation d'un protocole de communication sans fil en réseau informatique local à partir d'une station cliente mobile qui permette de s'affranchir d'au moins une partie des problèmes et contraintes précités. Le document US 2014/362765 décrit une implémentation du protocole MPTCP dans laquelle l'établissement d'une connexion TCP par un réseau WLAN est suivie de l'établissement d'une connexion TCP avec un réseau cellulaire pour avoir une liaison de backup. En effet, la couverture cellulaire est plus large que la connexion WLAN.

Le document de Christroph Paasch et al: "Exploring mobile/WiFi handover with multipath TCP",Cellular Netowrks: opérations, challenges, and future design, ACM, 13 août 2012, pages 31-36 décrit une implémentation de MPTCP avec des liaisons WiFi et des liaisons cellulaires.

Le document WO 2015/094043 est similaire au document US 2014/362765 et décrit l'utilisation d'une liaison TCP sous MPTPC par un réseau cellulaire comme une liaison de backup d'une connexion WLAN.

L'invention est décrite dans les revendications. Notamment, il est proposé un procédé du type précité dans lequel :
- à l'occasion de l'ouverture de la première session, ouvrir en outre une session principale de communication pour la station cliente mobile par utilisation d'un protocole de communication sans fil en réseau téléphonique étendu,
- maintenir cette session principale ouverte tant que l'on souhaite maintenir l'accès à Internet pour la station cliente mobile, et
- joindre la session principale ainsi que chaque session propre à chaque point d'accès sélectionné sous la dépendance d'un même identifiant unique de session.

Ainsi, alors que les connexions et déconnexions successives par utilisation d'un protocole de communication sans fil en réseau informatique local peuvent être fréquentes lorsque la station cliente mobile se déplace, rendant les sessions de communication correspondantes éphémères, la session principale ouverte par communication sans fil en réseau téléphonique étendu peut perdurer tout le temps souhaité d'accès à Internet et lier entre elles toutes ces sessions éphémères en un même identifiant unique de session. Sans perte de session de communication principale permettant de conserver cet identifiant unique, il est alors possible d'échanger des données entre la station cliente mobile et Internet sans interruption de service, en sollicitant au maximum les sessions de communication éphémères successives tout en exploitant a minima la session principale plus coûteuse.

De façon optionnelle, l'identifiant unique de session est l'identifiant d'une méta-session ouverte à l'occasion de l'ouverture de la première session et de la session principale, chaque session ouverte lors de l'établissement et pendant le maintien de l'accès à Internet ainsi que la méta-session sous la dépendance de laquelle sont jointes ces sessions étant des sessions de communication identifiées au niveau Transport du modèle OSI d'Interconnexion des Systèmes Ouverts.

De façon optionnelle également, chaque session ouverte lors de l'établissement et pendant le maintien de l'accès à Internet est une session de communication conforme au protocole TCP.

De façon optionnelle également, la méta-session ainsi que les sessions jointes sous sa dépendance sont ouvertes conformément au protocole Multipath TCP du groupe IETF.

De façon optionnelle également, la session principale ouverte par utilisation dudit protocole de communication sans fil en réseau téléphonique étendu est utilisée uniquement pour des transmissions de messages de signalisation à fonction de jonction des sessions ouvertes lors de l'établissement et pendant le maintien de l'accès à Internet ou à fonction de maintien du même identifiant unique de session.

De façon optionnelle également, les messages à fonction de maintien du même identifiant unique de session sont des messages de type TCP Keepalive.

De façon optionnelle également, le protocole de communication sans fil en réseau informatique local est l'un de ceux normalisés par le groupe IEEE 802.11.

De façon optionnelle également, le protocole de communication sans fil en réseau téléphonique étendu est l'un de ceux normalisés sous l'appellation 2G, 3G ou 4G.

Il est également proposé un programme d'ordinateur téléchargeable depuis un réseau de communication et/ou enregistré sur un support lisible par ordinateur et/ou exécutable par un processeur, comprenant des instructions pour l'exécution les étapes d'un procédé d'établissement et de maintien d'un accès à Internet selon l'invention, lorsque ledit programme est exécuté sur un processeur de ladite station cliente mobile.

Il est également proposé un dispositif électronique mobile de communication sans fil conçu pour l'établissement et le maintien d'un accès à Internet par utilisation d'un protocole de communication sans fil en réseau informatique local par l'intermédiaire de plusieurs points d'accès, à choisir successivement dans le temps en fonction de déplacements du dispositif électronique mobile, dans un ensemble de points d'accès à Internet identifiés utilisant ce protocole de communication sans fil en réseau informatique local, le dispositif comportant un processeur et un gestionnaire d'accès à Internet programmé pour, lorsqu'il est exécuté par le processeur :
- établir un accès à Internet par utilisation du protocole de communication sans fil en réseau informatique local par l'intermédiaire d'un premier point d'accès sélectionné dans l'ensemble des points d'accès identifiés,
- ouvrir à cette occasion une première session de communication propre à ce premier point d'accès conformément au protocole de communication sans fil en réseau informatique local,
- maintenir l'accès à Internet tout en ouvrant au moins une autre session de communication propre à au moins un autre point d'accès ultérieurement sélectionné dans l'ensemble des points d'accès identifiés conformément au protocole de communication sans fil en réseau informatique local,
le gestionnaire d'accès à Internet étant plus précisément programmé pour maintenir l'accès à Internet de la façon suivante :
- à l'occasion de l'ouverture de la première session, ouvrir en outre une session principale de communication par utilisation d'un protocole de communication sans fil en réseau téléphonique étendu,
- maintenir cette session principale ouverte tant que le maintien de l'accès à Internet est programmé, et
- joindre la session principale ainsi que chaque session propre à chaque point d'accès sélectionné sous la dépendance d'un même identifiant unique de session.

L'invention sera mieux comprise à l'aide de la description qui va suivre, donnée uniquement à titre d'exemple et faite en se référant aux dessins annexés dans lesquels :
- la figure 1 représente schématiquement la structure générale d'une installation comportant un dispositif mobile pour l'établissement et le maintien d'un accès à Internet par utilisation d'un protocole de communication sans fil en réseau informatique local selon un mode de réalisation de l'invention,
- la figure 2 illustre les étapes successives d'un procédé mis en oeuvre par le dispositif mobile de la figure 1,
- la figure 3 représente schématiquement la structure générale d'un système pour l'établissement d'un accès accéléré à Internet par utilisation d'un protocole de communication sans fil en réseau informatique local à partir d'une station cliente mobile, et
- la figure 4 illustre les étapes successives d'un procédé mis en oeuvre par le système de la figure 3.

### Aspect principal de l'invention : établissement et maintien d'un accès à Internet par utilisation d'un protocole de communication sans fil en réseau informatique local à partir d'une station cliente mobile

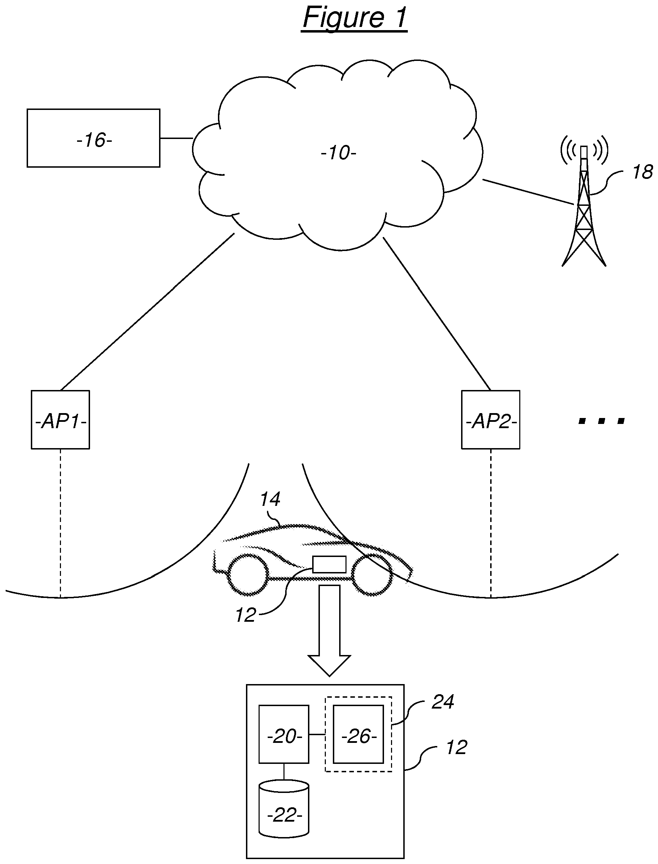

L'installation représentée schématiquement sur la figure 1, constituée pour l'établissement et le maintien d'un accès au réseau Internet (désigné par la référence 10) par utilisation d'un protocole de communication sans fil en réseau informatique local (i.e. un protocole WLAN) à partir d'une station cliente mobile, par l'intermédiaire de plusieurs points d'accès, à choisir successivement dans le temps en fonction de déplacements de la station cliente mobile, dans un ensemble de points d'accès à Internet identifiés utilisant ce protocole WLAN, comporte :
- une station cliente mobile 12 se présentant sous la forme d'un dispositif électronique mobile embarqué dans un véhicule automobile 14,
- un ensemble de points d'accès à Internet identifiés utilisant ce protocole WLAN dont deux seulement, AP1 et AP2, sont illustrés sur la figure 1 et se trouvent successivement sur un trajet de la station cliente mobile 12,
- un serveur Internet 16 programmé pour établir l'accès à Internet de la station cliente mobile 12 par l'intermédiaire tout d'abord du point d'accès AP1, puis du point d'accès AP2 et ainsi de suite par points d'accès successifs jusqu'à la fin souhaitée de l'accès à Internet, et
- au moins un point d'accès 18 à Internet par utilisation d'un protocole de communication sans fil en réseau téléphonique étendu.

Le protocole WLAN envisagé dans l'exemple illustré sur la figure 1 est par exemple un protocole Wi-Fi du groupe IEEE 802.11. On notera que les points d'accès Wi-Fi AP1, AP2, ... peuvent être gérés par un ou plusieurs fournisseurs d'accès Wi-Fi à Internet, avec ou sans exigence d'identifiant et mot de passe.

Le protocole de communication sans fil en réseau téléphonique étendu envisagé dans l'exemple illustré sur la figure 1 est par exemple l'un de ceux normalisés sous l'appellation 2G, 3G ou 4G.

La station cliente mobile 12 telle que représentée schématiquement sur la figure 1, par exemple un ordinateur portable, un téléphone mobile ou tout autre assistant numérique personnel, comporte un processeur 20 associé de façon classique à une mémoire, par exemple une mémoire RAM. Cette mémoire comporte fonctionnellement une base de données embarquée 22 et une zone 24 de stockage d'au moins un programme d'ordinateur 26 exécutable par le processeur 20. On notera que le programme d'ordinateur 26 est présenté comme unique, mais cette unicité est purement fonctionnelle. Il pourrait tout aussi bien être constitué selon toutes les combinaisons possibles en un ou plusieurs logiciels. Ses fonctions pourraient aussi être au moins en partie micro programmées ou micro câblées dans des circuits intégrés dédiés. Ainsi, en variante, la station cliente mobile 12 mettant en oeuvre le processeur 20 et sa mémoire RAM associée pourrait être constituée d'un dispositif électronique composé uniquement de circuits numériques (sans programme d'ordinateur) pour la réalisation des mêmes actions.

Plus précisément, le programme d'ordinateur 26 remplit une fonction de gestionnaire d'accès à Internet 10 programmé pour, lorsqu'il s'exécute sur commande du processeur 20 :
- demander et établir un accès à Internet par utilisation du protocole Wi-Fi précité par l'intermédiaire d'un premier point d'accès Wi-Fi accessible depuis la station cliente mobile 12 au cours de son trajet, par exemple le point d'accès AP1,
- ouvrir à cette occasion une première session de communication propre à ce premier point d'accès AP1 conformément au protocole Wi-Fi,
- maintenir l'accès à Internet en ouvrant en outre, à l'occasion de l'ouverture de la première session, une session principale de communication par utilisation du protocole de téléphonie mobile 2G, 3G ou 4G précité, par l'intermédiaire du point d'accès 18, et en maintenant cette session principale ouverte tant que le maintien de l'accès à Internet est souhaité par un utilisateur de la station cliente mobile 12,
- joindre la session principale et la première session propre au point d'accès AP1 sous la dépendance d'un même identifiant unique de session,
- lorsque la première session est perdue, ou même éventuellement avant qu'elle ne soit perdue, ouvrir une autre session de communication propre à au moins un autre point d'accès Wi-Fi ultérieurement accessible et sélectionné depuis la station cliente mobile 12 au cours de son trajet, par exemple le point d'accès AP2,
- joindre la nouvelle session propre au point d'accès AP2 à la session principale sous la dépendance de l'identifiant unique de session défini précédemment,
- ouvrir éventuellement au moins une autre session de communication propre à au moins un autre point d'accès Wi-Fi ultérieurement accessible et sélectionné depuis la station cliente mobile 12 au cours de son trajet, et
- joindre éventuellement chaque nouvelle session propre à un nouveau point d'accès Wi-Fi à la session principale sous la dépendance de l'identifiant unique de session défini précédemment.

L'identifiant unique de session défini ci-dessus est par exemple l'identifiant d'une méta-session ouverte à l'occasion de l'ouverture de la première session et de la session principale, chaque session ouverte lors de l'établissement et pendant le maintien de l'accès à Internet ainsi que la méta-session sous la dépendance de laquelle sont jointes ces sessions étant des sessions de communication identifiées au niveau Transport du modèle OSI d'Interconnexion des Systèmes Ouverts.

De façon optionnelle et avantageuse, la méta-session ainsi que les sessions jointes sous sa dépendance sont ouvertes conformément au protocole Multipath TCP du groupe IETF, les sessions jointes étant alors des sessions de communication conformes au protocole TCP.

Pour limiter les coûts liés à l'ouverture de la session principale de communication par téléphonie mobile 2G, 3G ou 4G, cette dernière peut être utilisée uniquement pour des transmissions de messages de signalisation à fonction de jonction des sessions ouvertes lors de l'établissement et pendant le maintien de l'accès à Internet ou à fonction de maintien du même identifiant unique de session, sachant que les messages à fonction de maintien du même identifiant unique de session sont par exemple des messages de type TCP Keepalive.

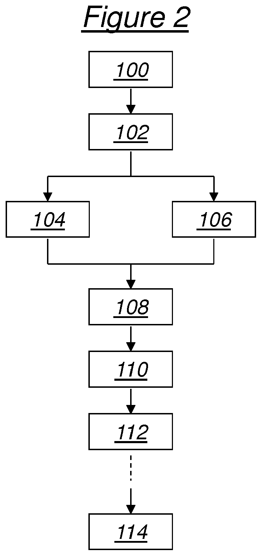

Un exemple de fonctionnement de la station cliente mobile 12 de la figure 1, selon un scénario conforme à ce qui est illustré dans cette figure 1, va maintenant être détaillé en référence à la figure 2.

A un instant donné le long du trajet suivi par le véhicule automobile 14, par exemple lorsqu'il est localisé dans une zone couverte par le point d'accès AP1, le gestionnaire 26 d'accès à Internet 10 exécuté par le processeur 20 de la station cliente mobile 12 demande un accès Wi-Fi à Internet lors d'une étape 100. Cette étape est traitée de façon connue en soi, de sorte qu'elle ne sera pas détaillée. Elle peut cependant être accélérée avantageusement pour une mise en oeuvre améliorée de l'invention selon un aspect secondaire contextuel qui sera, lui, détaillé ultérieurement. Elle s'exécute par sélection d'un point d'accès Wi-Fi, par exemple AP1, se poursuit par une association entre AP1 et la station cliente mobile 12, puis par une authentification de cette dernière, et s'achève par une phase de configuration attribuant une adresse IP (de l'anglais « Internet Protocol ») à la station cliente mobile 12.

Suite à cela, un accès Wi-Fi à Internet est effectivement établi lors d'une étape 102 par l'intermédiaire du point d'accès AP1 sélectionné sur la base des paramètres IP configurés.

A cette occasion, au cours d'une étape 104, une première session de communication Wi-Fi propre à ce premier point d'accès AP1 est ouverte

A cette occasion également, au cours d'une étape 106, une session principale de communication par téléphonie mobile 2G, 3G ou 4G est ouverte pour la station cliente mobile 12. Cette session principale est destinée à rester ouverte tant que le maintien de l'accès à Internet est souhaité.

Au cours d'une étape 108 suivante, la session principale et la première session propre au point d'accès AP1 sont jointes par le gestionnaire 26 sous la dépendance d'un même identifiant unique de session conformément au protocole Multipath TCP.

Au cours d'une étape 110 suivante, le véhicule automobile 14 quitte la zone couverte par le point d'accès AP1. La première session de communication Wi-Fi est perdue mais la session principale de communication par téléphonie mobile 2G, 3G ou 4G perdure et permet de conserver l'identifiant unique de session pour assurer une continuité de service.

Ensuite, au cours d'une étape 112, le véhicule automobile 14 entre dans la zone couverte par le point d'accès AP2 et ce dernier est sélectionné par le gestionnaire 26 pour l'ouverture d'une nouvelle session de communication Wi-Fi. Conformément au protocole Multipath TCP, cette nouvelle session est jointe à la session principale sous la dépendance de l'identifiant unique de session conservé.

Des fermetures et ouvertures de sessions de communication Wi-Fi peuvent ensuite se succéder, sous la dépendance de l'identifiant unique de session conservé, en fonction du trajet suivi par le véhicule automobile 14, jusqu'à une étape 114 de fin d'accès à Internet au cours de laquelle la dernière session de communication Wi-Fi est fermée ainsi que la session principale avec abandon de l'identifiant unique de session.

Il apparaît clairement que la station cliente mobile 12 de la figure 1, fonctionnant comme détaillé en référence à la figure 2, est capable de maintenir efficacement et à moindre coût une connexion Internet établie à l'aide de points d'accès Wi-Fi successifs dont les zones de couvertures ne sont pas suffisamment étendues pour éviter des zones blanches. En outre, les phases d'établissement des sessions de communication Wi-Fi n'ont pas besoin d'être adaptées, contrairement à d'autres solutions connues non orientées connexions ou résistantes aux déconnexions/reconnexions.

On notera par ailleurs que l'invention n'est pas limitée au mode de réalisation décrit précédemment.

En particulier, l'invention s'applique à d'autres protocoles de communication sans fil en réseau informatique local que le Wi-Fi.

En outre, la notion de lien entre sessions de communication n'est pas limitée au protocole TCP ou Multipath TCP et peut se généraliser dans d'autres contextes et protocoles (le contexte de la voix sur IP, par exemple).

Il apparaîtra plus généralement à l'homme de l'art que diverses modifications peuvent être apportées au mode de réalisation décrit ci-dessus, à la lumière de l'enseignement qui vient de lui être divulgué. Dans les revendications qui suivent, les termes utilisés ne doivent pas être interprétés comme limitant les revendications au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

### Aspect secondaire contextuel de l'invention : établissement accéléré d'un accès à Internet par utilisation d'un protocole de communication sans fil en réseau informatique local à partir d'une station cliente mobile

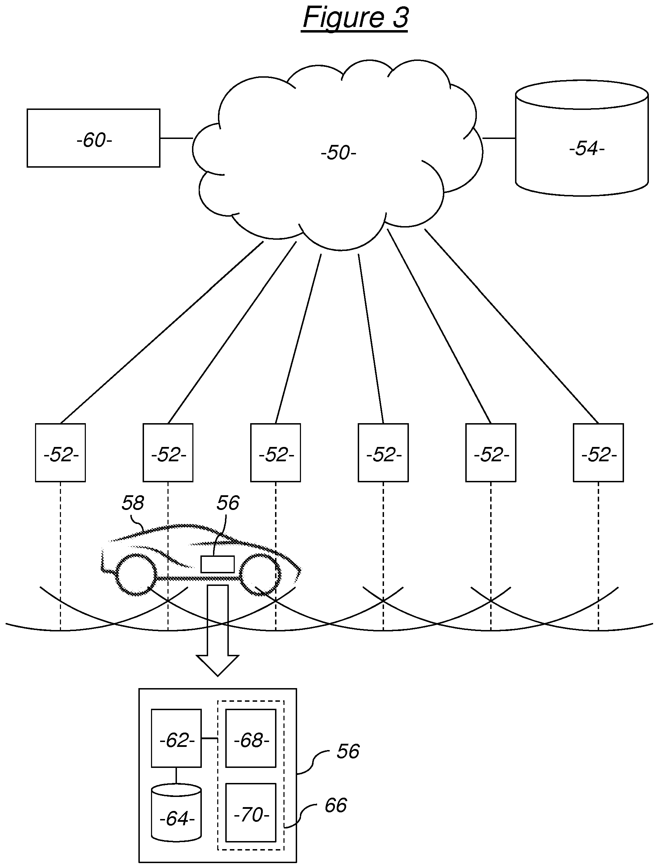

Le système représenté schématiquement sur la figure 3, constitué pour l'établissement d'un accès accéléré au réseau Internet (désigné par la référence 50) par utilisation d'un protocole de communication sans fil en réseau informatique local (i.e. un protocole WLAN) à partir d'une ou plusieurs stations clientes, par l'intermédiaire d'un point d'accès à choisir dans un ensemble de points d'accès à Internet identifiés 52 utilisant ce protocole WLAN, comporte :
- une base de données générale 54, accessible par Internet 50, reprenant l'ensemble des points d'accès identifiés 52 avec des informations de connexion propres à chaque point d'accès,
- au moins une station cliente mobile 56, par exemple embarquée dans un véhicule automobile 58, et
- un serveur Internet 60 programmé pour établir l'accès à Internet de la station cliente mobile 56 par l'intermédiaire d'un point d'accès sélectionné dans l'ensemble de points d'accès à Internet identifiés 52 sur la base de paramètres IP configurés pour la station cliente mobile 56.

Le protocole WLAN envisagé dans l'exemple illustré sur la figure 3 est par exemple un protocole Wi-Fi du groupe IEEE 802.11. On notera que les points d'accès Wi-Fi de l'ensemble de points d'accès identifiés 52 peuvent être gérés par un ou plusieurs fournisseurs d'accès Wi-Fi à Internet, avec ou sans exigence d'identifiant et mot de passe.

La station cliente mobile 56 telle que représentée schématiquement sur la figure 3, par exemple un ordinateur portable, un téléphone mobile ou tout autre assistant numérique personnel, comporte un processeur 62 associé de façon classique à une mémoire, par exemple une mémoire RAM. Cette mémoire comporte fonctionnellement une base de données embarquée 64 et une zone 66 de stockage de programmes d'ordinateurs 68 et 70 exécutables par le processeur 62. On notera que les programmes d'ordinateurs 68 et 70 sont présentés comme distincts, mais cette distinction est purement fonctionnelle. Ils pourraient tout aussi bien être regroupés selon toutes les combinaisons possibles en un ou plusieurs logiciels. Leurs fonctions pourraient aussi être au moins en partie micro programmées ou micro câblées dans des circuits intégrés dédiés. Ainsi, en variante, la station cliente mobile 16 mettant en oeuvre le processeur 62 et sa mémoire RAM associée pourrait être remplacée par un dispositif électronique composé uniquement de circuits numériques (sans programme d'ordinateur) pour la réalisation des mêmes actions.

Plus précisément, le programme d'ordinateur 68 remplit une fonction de gestionnaire de téléchargement, dans la base de données embarquée 64, des informations de connexion d'au moins une partie des points d'accès identifiés de la base de données générale 54.

Plus précisément également, le programme d'ordinateur 70 remplit une fonction de gestionnaire d'accès à Internet 50 programmé pour, lorsqu'il s'exécute, demander un accès à Internet par utilisation du protocole Wi-Fi précité, en procédant successivement aux phases suivantes : parcours d'au moins une partie des points d'accès identifiés 52 pour lister ceux détectés comme accessibles par la station cliente mobile 56 ; sélection de l'un des points d'accès listés précédemment ; requête d'une association de la station cliente mobile 56 au point d'accès sélectionné ; authentification de la station cliente mobile 56 auprès du point d'accès qui vient de lui être associé ; configuration de paramètres IP de la station cliente mobile 56. La dernière phase de configuration peut par exemple se faire selon le protocole DHCP (de l'anglais « Dynamic Host Configuration Protocol ») ou équivalent.

Conformément à l'aspect secondaire contextuel de l'invention, le processeur 62 est programmé pour séquencer les exécutions du gestionnaire de téléchargement 68 et du gestionnaire 70 d'accès à Internet de la façon suivante :
- exécuter le gestionnaire de téléchargement 68 indépendamment de et préalablement à une exécution du gestionnaire 70 d'accès à Internet,
- exécuter le gestionnaire 70 d'accès à Internet en procédant aux phases de parcours et de sélection du protocole Wi-Fi à partir des informations de connexion téléchargées préalablement dans la base de données embarquée 64, sans sollicitation de la base de données générale 54 et des points d'accès identifiés 52.

Le processeur 62 est également programmé de façon connue en soi pour participer à un établissement de l'accès à Internet 50 de la station cliente mobile 56 par l'intermédiaire du point d'accès sélectionné par le gestionnaire 70.

Au cours de cet accès à Internet et de façon optionnelle, des caractéristiques de performance du point d'accès sélectionné peuvent être mesurées, par exemple par le gestionnaire 70 ou par le serveur Internet 60. Ces caractéristiques sont alors avantageusement transmises à la base de données générale 54 pour une mise à jour de ce qu'elle contient comme informations de connexion relatives à ce point d'accès sélectionné. Le système étant adapté pour une sollicitation à chaque instant et de façon simultanée par plusieurs stations clientes mobiles, via plusieurs points d'accès identifiés, cela permet d'assurer une gestion dynamique de tout le contenu de la base de données générale 54 par un apprentissage ou retour d'expériences permanent.

Les informations de connexion de l'ensemble des points d'accès à Internet identifiés 52 dans la base de données générale 54 comportent plus précisément, pour chaque point d'accès, au moins :
- un identifiant, par exemple BSSID (de l'anglais « Basic Service Set IDentifier), du point d'accès Wi-Fi considéré,
- une localisation ou couverture géographique du point d'accès Wi-Fi considéré,
- un canal de communication préféré du point d'accès Wi-Fi considéré lorsqu'il établit une connexion, et
- des caractéristiques de performance du point d'accès Wi-Fi considéré.

Les caractéristiques de performance sont définies selon différentes métriques connues en soi pour indiquer une qualité de service fournie par le point d'accès considéré pour une connexion Wi-Fi. Elles comportent par exemple des temps de parcours RTT (de l'anglais « Round-Trip Time »), des évolutions temporelles de ces RTT, une bande passante estimée, un débit maximal pouvant être atteint, un classement selon plusieurs classes prédéterminées dont le nombre est strictement inférieur au nombre de points d'accès identifiés, etc. Cette liste n'est bien sûr ni exhaustive ni limitative.

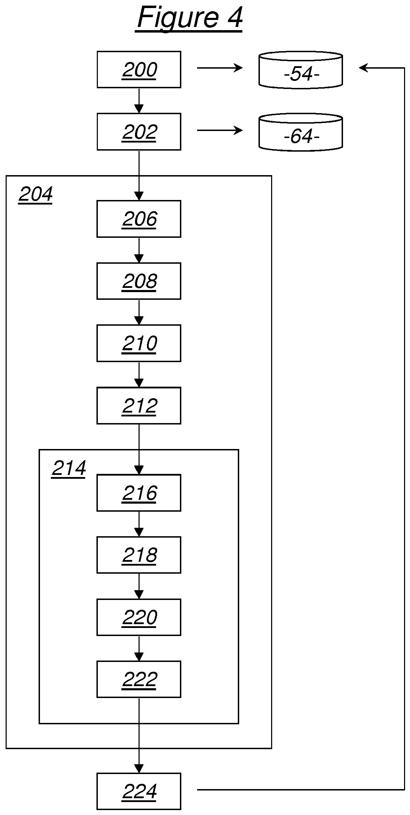

Un exemple de fonctionnement du système de la figure 3 va maintenant être détaillé en référence à la figure 4.

Au cours d'une étape 200 préalable à toute utilisation du système, la base de données générale 54 est créée. Elle reprend un ensemble de points d'accès identifiés 52 susceptibles d'être sollicités par une station cliente mobile quelconque telle que la station cliente 56 embarquée dans le véhicule automobile 58. Elle associe, à chacun de ces points d'accès identifiés 52, des valeurs relatives aux informations de connexion précitées. Elle est accessible par Internet 50 en lecture, pour des téléchargements dans des bases de données embarquées de stations clientes, et en écriture, pour des mises à jour par apprentissage ou retours d'expériences.

Au cours d'une étape 202 préalable à toute demande d'accès Wi-Fi à Internet 50, le gestionnaire de téléchargement 68 est exécuté par le processeur 62 de la station cliente mobile 56 pour le téléchargement, dans la base de données embarquée 64, des informations de connexion d'au moins une partie des points d'accès de la base de données générale 54. Ce téléchargement se fait indépendamment de toute exécution du gestionnaire 70 d'accès à Internet.

Dans l'exemple illustré sur la figure 3 où la station cliente mobile 56 est embarquée dans le véhicule automobile 58, cela peut se faire au démarrage du véhicule automobile 58, par exemple lorsqu'un utilisateur définit son trajet sur un ordinateur de bord. Les points d'accès identifiés dans la base de données générale 54 susceptibles d'être accessibles à un moment donné ou un autre du trajet sont alors sélectionnés et leurs informations de connexion téléchargées. La sélection peut également tenir compte d'un fournisseur d'accès Wi-Fi préféré. Le téléchargement peut être exécuté de nouveau à tout moment le long du trajet, notamment lorsque celui-ci est modifié en cours de route.

A un instant donné le long du trajet, le gestionnaire 70 d'accès à Internet de la station cliente mobile 56 demande un accès Wi-Fi à Internet lors d'une étape 204.

Cette étape 204 comporte cinq phases successives identifiées par les références 206, 208, 210, 212 et 214.

La première phase 206 consiste à parcourir au moins une partie des points d'accès identifiés 52 pour lister ceux détectés comme accessibles par la station cliente mobile 56. De manière à accélérer significativement l'accès Wi-Fi, cette phase de parcours 206 se fait avantageusement à partir des informations de connexion téléchargées préalablement dans la base de données embarquée 64. Notamment, en fonction de la localisation géographique de la station cliente mobile 56 au moment où s'exécute cette phase de parcours 206, par exemple obtenue par GPS (de l'anglais « Global Positioning System »), le parcours des points d'accès Wi-Fi accessibles peut être réalisé sans sollicitation de la base de données générale 54 et des points d'accès identifiés 52 par simple comparaison entre la localisation GPS obtenue et les informations de localisations ou couvertures géographiques téléchargées en base de données embarquée 64. Ce parcours peut également être fait à l'avance en associant préalablement des localisations géographiques possibles de la station cliente mobile 56 à des listes de points d'accès accessibles parmi ceux téléchargés lors de l'étape 202.

La deuxième phase 208 consiste à sélectionner l'un des points d'accès listés lors de la phase de parcours 206. De manière à accélérer significativement l'accès Wi-Fi, cette phase de sélection 208 se fait avantageusement à partir des informations de connexion téléchargées préalablement dans la base de données embarquée 64, sans sollicitation de la base de données générale 54 et des points d'accès identifiés 52. Grâce aux caractéristiques de performance précitées notamment, un classement des points d'accès peut être aisément établi, éventuellement même de façon anticipée. Par ailleurs, dans le cas où les points d'accès identifiés dans la base de données générale 54 sont répartis dans des classes prédéterminées dont le nombre est strictement inférieur au nombre de points d'accès identifiés 52, cette phase de sélection 208 peut être encore simplifiée. Elle comporte alors la sélection d'une classe, puis la sélection finale d'un point d'accès de cette classe parmi les points d'accès listés lors de la phase de parcours 206. Pour éviter que des points d'accès très bien classés soient sur-sollicités, la sélection finale se fait avantageusement de façon aléatoire, pseudo-aléatoire (par exemple à l'aide d'un algorithme de hachage) ou sur la base d'informations de charges des points d'accès listés.

La troisième phase 210 consiste à associer la station cliente mobile 56 au point d'accès sélectionné lors de la deuxième phase 208. Cette phase d'association 210 est connue en soi et ne sera pas détaillée. Elle comporte principalement l'émission d'une requête d'association par la station cliente mobile 56 et la réception d'un acquittement émis par le point d'accès sélectionné en réponse à cette requête.

La quatrième phase 212 consiste à authentifier la station cliente mobile 56 auprès du point d'accès qui vient de lui être associé. De façon connue en soi, cette phase d'authentification 212 comporte l'utilisation de paramètres de temporisations. Mais en général, ces temporisations sont de l'ordre de quelques dizaines de secondes, voire de la minute. Conformément à un mode de réalisation avantageux, ces temporisations sont réduites de manière à toujours rester inférieures ou égales à 5 secondes. Ainsi, la phase d'authentification 212 est statistiquement accélérée. A titre d'exemple non limitatif, l'authentification peut se faire par protocole EAP (de l'anglais « Extensible Authentication Protocol »).

La cinquième phase 214 consiste à configurer les paramètres IP de la station cliente mobile 56 et autres paramètres classiques de configuration nécessaires à l'établissement d'une connexion à Internet 50. Elle peut se faire selon le protocole DHCP. De façon connue en soi, cette phase de configuration 214 comporte l'utilisation de paramètres de temporisations, en particulier des temps de retours, dits temps de backoff. Mais en général, ces temporisations sont de l'ordre de quelques secondes et les temps de backoff sont à croissance linéaire ou exponentielle. Conformément à un mode de réalisation avantageux, ces temporisations sont réduites de manière à toujours rester inférieures ou égales à 500 millisecondes. Les temps de backoff sont quant à eux définis de manière à rester constants. Ainsi, la phase de configuration 214 est statistiquement accélérée.

Plus précisément, par exemple conformément au protocole DHCP, la phase de configuration 214 comporte elle-même quatre étapes : diffusion 216 par la station cliente mobile 56 d'une requête d'adresse IP dans le réseau, puis proposition 218 d'une adresse IP par exemple par le serveur Internet 60, puis requête 220 de l'adresse IP proposée, puis acquittement 222 pour validation de cette adresse IP. De façon connue en soi, cette phase de configuration peut être exécutée plusieurs fois en cas d'échecs successifs. Conformément à un mode de réalisation avantageux, lors d'une première exécution de cette phase de configuration 214 dans la demande d'accès 204, les deux premières étapes de diffusion 216 et de proposition d'adresse IP 218 ne sont pas exécutées, l'étape de requête 220 de l'adresse IP proposée pouvant être basée sur une adresse IP accordée à l'occasion d'une demande d'accès précédente. Cette caractéristique tire profit du fait qu'une adresse IP est généralement allouée pour une durée s'étendant au-delà de la durée moyenne d'une connexion Wi-Fi, surtout lorsque celle-ci est obtenue dans le contexte de la figure 3, c'est-à-dire pour la station cliente mobile 56 embarquée dans le véhicule automobile 58. Ainsi, la phase de configuration 214 est statistiquement accélérée.

Suite à l'exécution de la phase de configuration 214, l'étape 204 de demande d'accès Wi-Fi à Internet s'achève et est suivie d'une étape 224 d'établissement effectif de l'accès Wi-Fi à Internet de la station cliente mobile 56 par l'intermédiaire du point d'accès sélectionné sur la base des paramètres IP configurés. Comme indiqué précédemment, pendant la connexion Wi-Fi obtenue lors de l'étape 224, des caractéristiques de performance du point d'accès sélectionné peuvent être mesurées et transmises à la base de données générale 54 pour une mise à jour.

Il apparaît clairement qu'un système pour l'établissement d'un accès à Internet par utilisation d'un protocole de communication sans fil en réseau informatique local à partir d'une station cliente mobile tel que celui décrit précédemment en référence aux figures 3 et 4 permet de réduire substantiellement la durée d'une demande d'accès Wi-Fi à Internet. Alors que d'une manière générale un temps d'accès Wi-Fi est de l'ordre de 9 à 14 secondes, il peut être réduit à au plus 1,5 seconde, voire moins d'une seconde, grâce au système décrit précédemment.

Cet avantage est particulièrement important pour des applications ou la station cliente est très mobile, notamment lorsqu'elle est embarquée dans un véhicule automobile, puisqu'alors la durée d'une connexion Wi-Fi peut être très courte, notamment de l'ordre d'une ou de quelques dizaines de secondes en milieu urbain.

On notera cependant que bien que la présente invention puisse tirer profit d'un tel système conforme à l'aspect secondaire contextuel détaillé ci-dessus pour améliorer son efficacité, cela n'est pas indispensable. L'effet technique qu'elle produit est indépendant de cet aspect secondaire.

## Revendications

1. Procédé d'établissement et de maintien d'un accès à Internet (10) par utilisation d'un protocole de communication sans fil en réseau informatique local à partir d'une station cliente mobile (12), par l'intermédiaire de plusieurs points d'accès (AP1, AP2), à choisir successivement dans le temps en fonction de déplacements de la station cliente mobile (12), dans un ensemble de points d'accès à Internet identifiés utilisant ce protocole de communication sans fil en réseau informatique local, comportant les étapes suivantes réalisées par la station cliente mobile
- établir (102), pour la station cliente mobile (12), un accès à Internet (10) par utilisation du protocole de communication sans fil en réseau informatique local par l'intermédiaire d'un premier point d'accès (AP1) sélectionné dans l'ensemble des points d'accès identifiés,
- ouvrir (104) à cette occasion, pour la station cliente mobile (12), une première session de communication propre à ce premier point d'accès (AP1) conformément au protocole de communication sans fil en réseau informatique local,
- maintenir, pour la station cliente mobile (12), l'accès à Internet (10) tout en ouvrant (112) au moins une autre session de communication propre à au moins un autre point d'accès (AP2) ultérieurement sélectionné dans l'ensemble des points d'accès identifiés conformément au protocole de communication sans fil en réseau informatique local,
**caractérisé en ce que** le maintien de l'accès à Internet est assuré de la façon suivante :
- à l'occasion de l'ouverture (104) de la première session, ouvrir (106) en outre une session principale de communication pour la station cliente mobile (12) par utilisation d'un protocole de communication en réseau mobile terrestre public,
- maintenir (106, 114) cette session principale ouverte tant que l'on souhaite maintenir l'accès à Internet (10) pour la station cliente mobile (12), et
- joindre (108) la session principale ainsi que chaque session propre à chaque point d'accès sélectionné (AP1, AP2) sous la dépendance d'un même identifiant unique de session.

2. Procédé d'établissement et de maintien d'un accès à Internet (10) selon la revendication 1, dans lequel l'identifiant unique de session est l'identifiant d'une méta-session ouverte à l'occasion de l'ouverture (104, 106) de la première session et de la session principale, chaque session ouverte lors de l'établissement et pendant le maintien de l'accès à Internet (10) ainsi que la méta-session sous la dépendance de laquelle sont jointes ces sessions étant des sessions de communication identifiées au niveau Transport du modèle OSI d'Interconnexion des Systèmes Ouverts.

3. Procédé d'établissement et de maintien d'un accès à Internet (10) selon la revendication 2, dans lequel chaque session ouverte lors de l'établissement et pendant le maintien de l'accès à Internet est une session de communication conforme au protocole TCP.

4. Procédé d'établissement et de maintien d'un accès à Internet (10) selon la revendication 3, dans lequel la méta-session ainsi que les sessions jointes sous sa dépendance sont ouvertes conformément au protocole Multipath TCP du groupe IETF.

5. Procédé d'établissement et de maintien d'un accès à Internet (10) selon l'une quelconque des revendications 1 à 4, dans lequel la session principale ouverte par utilisation dudit protocole de communication en réseau mobile terrestre public est utilisée uniquement pour des transmissions de messages de signalisation à fonction de jonction des sessions ouvertes lors de l'établissement et pendant le maintien de l'accès à Internet (10) ou à fonction de maintien du même identifiant unique de session.

6. Procédé d'établissement et de maintien d'un accès à Internet (10) selon les revendications 4 et 5, dans lequel les messages à fonction de maintien du même identifiant unique de session sont des messages de type TCP Keepalive.

7. Procédé d'établissement et de maintien d'un accès à Internet (10) selon l'une quelconque des revendications 1 à 6, dans lequel le protocole de communication sans fil en réseau informatique local est l'un de ceux normalisés par le groupe IEEE 802.11.

8. Procédé d'établissement et de maintien d'un accès à Internet (10) selon l'une quelconque des revendications 1 à 7, dans lequel le protocole de communication en réseau mobile terrestre public est l'un de ceux normalisés sous l'appellation 2G, 3G ou 4G.

9. Programme d'ordinateur (26) téléchargeable depuis un réseau de communication et/ou enregistré sur un support (24) lisible par ordinateur et/ou exécutable par un processeur, comprenant des instructions pour l'exécution les étapes d'un procédé d'établissement et de maintien d'un accès à Internet (10) selon l'une quelconque des revendications 1 à 8, lorsque ledit programme (26) est exécuté sur un processeur (20) de ladite station cliente mobile(12).

10. Dispositif électronique mobile (12) de communication sans fil conçu pour l'établissement et le maintien d'un accès à Internet (10) par utilisation d'un protocole de communication sans fil en réseau informatique local par l'intermédiaire de plusieurs points d'accès (AP1, AP2), à choisir successivement dans le temps en fonction de déplacements du dispositif électronique mobile (12), dans un ensemble de points d'accès à Internet identifiés utilisant ce protocole de communication sans fil en réseau informatique local, le dispositif (12) comportant un processeur (20) et un gestionnaire (26) d'accès à Internet (10) programmé pour, lorsqu'il est exécuté par le processeur (20) :
- établir un accès à Internet (10) par utilisation du protocole de communication sans fil en réseau informatique local par l'intermédiaire d'un premier point d'accès (AP1) sélectionné dans l'ensemble des points d'accès identifiés,
- ouvrir à cette occasion une première session de communication propre à ce premier point d'accès (AP1) conformément au protocole de communication sans fil en réseau informatique local,
- maintenir l'accès à Internet (10) tout en ouvrant au moins une autre session de communication propre à au moins un autre point d'accès (AP2) ultérieurement sélectionné dans l'ensemble des points d'accès identifiés conformément au protocole de communication sans fil en réseau informatique local,
**caractérisé en ce que** le gestionnaire (26) d'accès à Internet (10) est plus précisément programmé pour maintenir l'accès à Internet (10) de la façon suivante :
- à l'occasion de l'ouverture de la première session, ouvrir en outre une session principale de communication par utilisation d'un protocole de communication en réseau mobile terrestre public,
- maintenir cette session principale ouverte tant que le maintien de l'accès à Internet (10) est programmé, et
- joindre la session principale ainsi que chaque session propre à chaque point d'accès sélectionné sous la dépendance d'un même identifiant unique de session.

## Patentansprüche

1. Verfahren zum Aufbau und zur Aufrechterhaltung eines Internetzugangs (10) durch Verwendung eines WLAN-Protokolls von einer mobilen Client-Station (12) aus über mehrere Zugangspunkte (AP1, AP2), die zeitlich nacheinander in Abhängigkeit von Bewegungen der mobilen Client-Station (12) aus einer Gesamtheit von Internet-Zugangspunkten, die unter Verwendung dieses WLAN-Protokolls identifiziert wurden, auszuwählen sind, die folgenden Schritte umfassend, die von der mobilen Client-Station ausgeführt werden:
- Aufbauen (102), für die mobile Client-Station (12), eines Internetzugangs (10) durch Verwendung des WLAN-Protokolls über einen ersten Zugangspunkt (AP1), der aus der Gesamtheit der identifizierten Zugangspunkte ausgewählt wurde,
- Öffnen (104), bei dieser Gelegenheit, für die mobile Client-Station (12), einer ersten Kommunikationssitzung, die diesem ersten Zugangspunkt (AP1) zugeordnet ist, gemäß dem WLAN-Protokoll,
- Aufrechterhalten, für die mobile Client-Station (12), des Internetzugangs (10) bei gleichzeitigem Öffnen (112) wenigstens einer weiteren Kommunikationssitzung, die wenigstens einem weiteren Zugangspunkt (AP2) zugeordnet ist, der später aus der Gesamtheit der Zugangspunkte ausgewählt wurde, die gemäß dem WLAN-Protokoll identifiziert wurden,
**dadurch gekennzeichnet, dass** die Aufrechterhaltung des Internetzugangs auf die folgende Weise sichergestellt wird:
- beim Öffnen (104) der ersten Sitzung, außerdem Öffnen (106) einer Kommunikations-Hauptsitzung für die mobile Client-Station (12) durch Verwendung eines Kommunikationsprotokolls in einem öffentlichen terrestrischen Mobilfunknetz,
- Aufrechterhalten (106, 114) dieser geöffneten Hauptsitzung, solange gewünscht wird, den Internetzugang (10) für die mobile Client-Station (12) aufrechtzuerhalten, und
- Beitreten (108) zu der Hauptsitzung sowie jeder Sitzung, die einem ausgewählten Zugangspunkt (AP1, AP2) zugeordnet ist, in Abhängigkeit von ein und derselben eindeutigen Sitzungskennung.

2. Verfahren zum Aufbau und zur Aufrechterhaltung eines Internetzugangs (10) nach Anspruch 1, wobei die eindeutige Sitzungskennung die Kennung einer Meta-Sitzung ist, die beim Öffnen (104, 106) der ersten Sitzung und der Hauptsitzung geöffnet wird, wobei jede Sitzung, die beim Aufbau und während der Aufrechterhaltung des Internetzugangs (10) geöffnet wird, sowie die Meta-Sitzung, unter deren Kontrolle diese Sitzungen verbunden sind, Kommunikationssitzungen sind, die auf der Transportebene des Open Systems Interconnection (OSI) Modells identifiziert werden.

3. Verfahren zum Aufbau und zur Aufrechterhaltung eines Internetzugangs (10) nach Anspruch 2, wobei jede Sitzung, die beim Aufbau und während der Aufrechterhaltung des Internetzugangs geöffnet wird, eine Kommunikationssitzung gemäß dem TCP-Protokoll ist.

4. Verfahren zum Aufbau und zur Aufrechterhaltung eines Internetzugangs (10) nach Anspruch 3, wobei die Meta-Sitzung sowie die unter ihrer Kontrolle verbundenen Sitzungen gemäß dem Multipath-TCP-Protokoll der IETF geöffnet werden.

5. Verfahren zum Aufbau und zur Aufrechterhaltung eines Internetzugangs (10) nach einem der Ansprüche 1 bis 4, wobei die Hauptsitzung, die durch Verwendung des Kommunikationsprotokolls in einem öffentlichen terrestrischen Mobilfunknetz geöffnet wird, ausschließlich für Übertragungen von Signalisierungsnachrichten zur Verbindung der beim Aufbau und während der Beibehaltung des Internetzugangs (10) geöffneten Sitzungen oder zur Beibehaltung derselben eindeutigen Sitzungskennung verwendet wird.

6. Verfahren zum Aufbau und zur Aufrechterhaltung eines Internetzugangs (10) nach den Ansprüchen 4 und 5, wobei die Nachrichten zur Beibehaltung derselben eindeutigen Sitzungskennung Nachrichten vom Typ TCP Keepalive sind.

7. Verfahren zum Aufbau und zur Aufrechterhaltung eines Internetzugangs (10) nach einem der Ansprüche 1 bis 6, wobei das WLAN-Protokoll eines von denjenigen ist, die durch IEEE 802.11 standardisiert wurden.

8. Verfahren zum Aufbau und zur Aufrechterhaltung eines Internetzugangs (10) nach einem der Ansprüche 1 bis 7, wobei das Kommunikationsprotokoll in einem öffentlichen terrestrischen Mobilfunknetz eines von denjenigen ist, die unter der Bezeichnung 2G, 3G oder 4G standardisiert wurden.

9. Computerprogramm (26), das von einem Kommunikationsnetz herunterladbar und/oder auf einem computerlesbaren Medium (24) gespeichert und/oder von einem Prozessor ausführbar ist und Anweisungen zur Ausführung der Schritte eines Verfahrens zum Aufbau und zur Aufrechterhaltung eines Internetzugangs (10) nach einem der Ansprüche 1 bis 8, wenn das Programm (26) von einem Prozessor (20) der mobilen Client-Station (12) ausgeführt wird, umfasst.

10. Mobile elektronische Vorrichtung (12) zur drahtlosen Kommunikation, welche für den Aufbau und die Aufrechterhaltung eines Internetzugangs (10) durch Verwendung eines WLAN-Protokolls über mehrere Zugangspunkte (AP1, AP2) ausgelegt ist, die zeitlich nacheinander in Abhängigkeit von Bewegungen der mobilen elektronischen Vorrichtung (12) aus einer Gesamtheit von Internet-Zugangspunkten, die unter Verwendung dieses WLAN-Protokolls identifiziert wurden, auszuwählen sind, wobei die Vorrichtung (12) einen Prozessor (20) aufweist, und einen Manager (26) für den Internetzugang (10), der programmiert ist, wenn er von dem Prozessor (20) ausgeführt wird, zum:
- Aufbauen eines Internetzugangs (10) durch Verwendung des WLAN-Protokolls über einen ersten Zugangspunkt (AP1), der aus der Gesamtheit der identifizierten Zugangspunkte ausgewählt wurde,
- Öffnen, bei dieser Gelegenheit, einer ersten Kommunikationssitzung, die diesem ersten Zugangspunkt (AP1) zugeordnet ist, gemäß dem WLAN-Protokoll,
- Aufrechterhalten des Internetzugangs (10) bei gleichzeitigem Öffnen wenigstens einer weiteren Kommunikationssitzung, die wenigstens einem weiteren Zugangspunkt (AP2) zugeordnet ist, der später aus der Gesamtheit der Zugangspunkte ausgewählt wurde, die gemäß dem WLAN-Protokoll identifiziert wurden,
**dadurch gekennzeichnet, dass** der Manager (26) für den Internetzugang (10) insbesondere dafür programmiert ist, den Internetzugang (10) auf die folgende Weise aufrechtzuerhalten:
- beim Öffnen der ersten Sitzung, außerdem Öffnen einer Kommunikations-Hauptsitzung durch Verwendung eines Kommunikationsprotokolls in einem öffentlichen terrestrischen Mobilfunknetz,
- Aufrechterhalten dieser geöffneten Hauptsitzung, solange die Aufrechterhaltung des Internetzugangs (10) programmiert ist, und
- Beitreten zu der Hauptsitzung sowie jeder Sitzung, die einem ausgewählten Zugangspunkt zugeordnet ist, in Abhängigkeit von ein und derselben eindeutigen Sitzungskennung.

## Claims

1. Method for establishing and maintaining Internet access (10) through the use of a local computer network wireless communication protocol from a mobile client station (12), by way of several access points (AP1, AP2), to be chosen successively over time as a function of displacements of the mobile client station (12), from a set of Internet access points identified using this local computer network wireless communication protocol, comprising the following steps carried out by the mobile client station:
- establish (102), for the mobile client station (12), Internet access (10) through the use of the local computer network wireless communication protocol by way of a first access point (AP1) selected from the set of identified access points,
- open (104) on this occasion, for the mobile client station (12), a first communication session specific to this first access point (AP1) in compliance with the local computer network wireless communication protocol,
- maintain, for the mobile client station (12), Internet access (10) while opening (112) at least one other communication session specific to at least one other access point (AP2) subsequently selected from the set of identified access points in compliance with the local computer network wireless communication protocol,
**characterized in that** the maintaining of Internet access is ensured in the following manner:
- on the occasion of the opening (104) of the first session, furthermore open (106) a main communication session for the mobile client station (12) through the use of a public terrestrial mobile network communication protocol,
- maintain (106, 114) this main session open as long as one wishes to maintain Internet access (10) for the mobile client station (12), and
- join (108) the main session as well as each session specific to each selected access point (AP1, AP2) under the dependency of one and the same unique session identifier.

2. Method for establishing and maintaining Internet access (10) according to Claim 1, in which the unique session identifier is the identifier of a meta-session opened on the occasion of the opening (104, 106) of the first session and of the main session, each session opened upon the establishment and during the maintaining of Internet access (10) as well as the meta-session under the dependency of which these sessions are joined being communication sessions identified at the Transport level of the OSI Open Systems Interconnection model.

3. Method for establishing and maintaining Internet access (10) according to Claim 2, in which each session opened upon the establishment and during the maintaining of Internet access is a communication session compliant with the TCP protocol.

4. Method for establishing and maintaining Internet access (10) according to Claim 3, in which the meta-session as well as the sessions joined under its dependency are opened in compliance with the Multipath TCP protocol of the IETF group.

5. Method for establishing and maintaining Internet access (10) according to any one of Claims 1 to 4, in which the main session opened through the use of the said public terrestrial mobile network communication protocol is used solely for transmissions of signalling messages with function of joining the sessions opened upon the establishment and during the maintaining of Internet access (10) or with function of maintaining the same unique session identifier.

6. Method for establishing and maintaining Internet access (10) according to Claims 4 and 5, in which the messages with function of maintaining the same unique session identifier are messages of TCP Keepalive type.

7. Method for establishing and maintaining Internet access (10) according to any one of Claims 1 to 6, in which the local computer network wireless communication protocol is one of those standardized by the IEEE 802.11 group.

8. Method for establishing and maintaining Internet access (10) according to any one of Claims 1 to 7, in which the public terrestrial mobile network communication protocol is one of those standardized under the 2G, 3G or 4G label.

9. Computer program (26) downloadable from a communication network and/or recorded on a medium (24) readable by computer and/or executable by a processor, comprising instructions for executing the steps of a method for establishing and maintaining Internet access (10) according to any one of Claims 1 to 8, when the said program (26) is executed on a processor (20) of the said mobile client station (12).

10. Mobile electronic device (12) for wireless communication designed for the establishment and the maintaining of Internet access (10) through the use of a local computer network wireless communication protocol by way of several access points (AP1, AP2), to be chosen successively over time as a function of displacements of the mobile electronic device (12), from a set of Internet access points identified using this local computer network wireless communication protocol, the device (12) comprising a processor (20) and a manager (26) of Internet access (10) programmed to, when it is executed by the processor (20):
- establish Internet access (10) through the use of the local computer network wireless communication protocol by way of a first access point (AP1) selected from the set of identified access points,
- open on this occasion a first communication session specific to this first access point (AP1) in compliance with the local computer network wireless communication protocol,
- maintain Internet access (10) while opening at least one other communication session specific to at least one other access point (AP2) subsequently selected from the set of identified access points in compliance with the local computer network wireless communication protocol,
**characterized in that** the manager (26) of Internet access (10) is more precisely programmed to maintain Internet access (10) in the following manner:
- on the occasion of the opening of the first session, furthermore open a main communication session through the use of a public terrestrial mobile network communication protocol,
- maintain this main session open as long as the maintaining of Internet access (10) is programmed, and
- join the main session as well as each session specific to each access point selected under the dependency of one and the same unique session identifier.
